(19) **Europäisches Patentamt**

**European Patent Office**

**Office européen des brevets**

(11) **EP 0 171 433 B2**

(12) **NEW EUROPEAN PATENT SPECIFICATION**

(45) Date of publication and mention
of the opposition decision:
**19.04.2000 Bulletin 2000/16**

(45) Mention of the grant of the patent:
**13.11.1991 Bulletin 1991/46**

(21) Application number: **85901222.1**

(22) Date of filing: **15.02.1985**

(51) Int. Cl.[7]: **H04Q 9/00**, G01S 13/74

(86) International application number:
**PCT/US85/00232**

(87) International publication number:
**WO 85/03831 (29.08.1985 Gazette 1985/19)**

(54) **IDENTIFICATION SYSTEM AND TRANSPONDER THEREFOR**

IDENTIFIKATIONSSYSTEM UND TRANSPONDER

SYSTEME D'IDENTIFICATIONET TRANSPONDEUR

(84) Designated Contracting States:
**AT BE CH DE FR GB LI LU NL SE**

(30) Priority: **15.02.1984 US 580401**

(43) Date of publication of application:
**19.02.1986 Bulletin 1986/08**

(73) Proprietor:
**DESTRON/IDI, INCORPORATED
Boulder, CO 80301 (US)**

(72) Inventor: **MILHEISER, Thomas, A.
Littleton, CO 80121 (US)**

(74) Representative:
**Hackett, Sean James et al
MARKS & CLERK,
57-60 Lincoln's Inn Fields
London WC2A 3LS (GB)**

(56) References cited:
| EP-A- 0 011 810 | DE-A- 2 651 836 |
| DE-A- 3 242 551 | FR-A- 2 336 741 |
| GB-A- 2 086 106 | GB-A- 2 116 808 |
| US-A- 3 689 885 | US-A- 3 964 024 |
| US-A- 4 196 418 | US-A- 4 313 033 |

EP 0 171 433 B2

**Description**

This invention relates to a system for identifying an object, animal or person, and to a transponder therefor. The system may be of the type comprising at minimum two units, one being a passive integrated transponder (PIT) which is carried by or embedded in the thing or animal to be identified and which responds to interrogation with an identifying code, and the other unit being an interrogator-reader separate from the PIT.

Heretofore, in identification device systems, there is usually found some sort of an exciter which is associated with an interrogator, which feeds a combined alternating current, clock signal, and power supply signal to a responder device via an inductive coupling. The responder may be implanted in an animal, or on an object the identity of which is to be ascertained, such as a freight car. The responder responds to the interrogation signal by producing a coded identification signal, which is fed back through the inductive coupling to a detector and demodulator, which in turn produces an output signal characteristic of the particular animal or object thus identified.

Many coded data transmission systems have been used. In some, the responder comprises a resonant circuit which varies in frequency in accordance with the identification of the animal or object being identified.

In Kaplan et al US Patent US-A-3,689,885, coded information is returned from a responder to an interrogator in the form of spaced bursts of energy of fixed frequency.

In Beigel US Patent US-A-4,333,072, for example, the responder draws power from the interrogator at levels varying according to an encoded signal characteristic of the animal or thing being identified.

All of these systems are subject to certain drawbacks. The resonant circuit systems are subject to variations in resonant frequency produced by, for example, changes in environment which, in some instances, could produce spurious variations in frequency which were difficult if not impossible to differentiate from variations produced by the encoding device.

In systems wherein the signal is encoded by variations in amplitude of an oscillating signal, such variations in amplitude are difficult to accurately detect and decode.

In Hanton et al US Patent US-A-4,262,632, an identification transponder transmits a frequency-shift-keyed identification signal in response to an interrogation signal.

French Patent Specification 2336741 discloses a transponder for use in an object identification system according to the preamble of claim 1.

German Patent Specification 3242551 relates to a device for object identification comprising a transmitter for transmitting a radio frequency signal for receipt by an object capable of receiving the signal and converting it into operation energy. Receipt of the signal by the object activates a memory and an identification signal is broadcast from the object for receipt by the transmitter. The identification code is modulated on the signal transmitted by the object. The degree of modulation measures the distance between the transmitter and the object.

Use of a frequency shift keyed transmission signal including a preamble, an identification portion and a further encoded portion between the preamble and identification portion in a portable addressable radio paging units is disclosed by GB-A-2 086 106.

Use of variable modulus counters clocked by an interrogating signal is known from US-A-4 196 418.

The invention and preferred embodiments thereof are defined in the appended claims.

In a preferred embodiment of the present invention, the transponder is implanted on the thing to be identified and is supplied with a combined clock and power signal from an interrogating unit which is inductively coupled to the transponder device. The transponder produces an encoded signal which is returned to the interrogating unit through the inductive coupling. However, the clock signal is used in a different way than in the predecessor devices, and the responsive signal generated by the transponder is different from those used therein.

The clock signal derived via the inductive coupling from the interrogating unit is reduced in frequency and is then shifted in frequency. In particular, an incoming clock signal of 400 kHz is fed to a variable modulus counter followed by a divide-by-two circuit. In one state, the input clock signal is divided by eight. In the other state, the clock signal is divided by ten. Thus, the output of the variable modulus counter produces a signal varying between 40 kHz and 50 kHz. A shift from one of these frequencies to the other is representative of a "zero" data bit; a shift in the other direction is representative of a "one".

The "ones" or "zeros" are produced by the encoding device and the identifying signals, comprising a sequence of shifts between 40 kHz or 50 kHz, are returned to the interrogating device via the inductive coupling and detected. It is an easy task for the interrogator-detector to distinguish between a shift from a 40 kHz signal to a 50 kHz signal and vice-versa. In the preferred embodiment, an array of logic gates is used to control the insertion of a sync word in the data stream, and the logic gates encode the data according to the well-known Manchester encoding technique. The result is a serial composite including sync and data information.

The composite data stream controls the modulus (divide ratio) of the variable modulus counter, which is clocked by the input clock (400 kHz), to vary between 4 and 5. The output of the variable modulus counter is thus either 80 kHz or 100 kHz depending on the data. A final divide-by-two network yields output frequencies of 40 kHz or 50 kHz, varying as a function of the data.

The invention will be further described, by way of example, with reference to the accompanying drawings, in which:

Figure 1 is a block diagram of the overall system;
Figure 2 is a circuit diagram of the exciter;
Figure 3 is a circuit diagram of the signal conditioner;
Figure 4 is a circuit diagram of the passive integrated transponder (PIT);
Figure 5 is a diagram of a typical data stream;
Figure 6 is a circuit diagram of the demodulator; and
Figures 7A and 7B are diagrams of the control logic and encoding circuit.

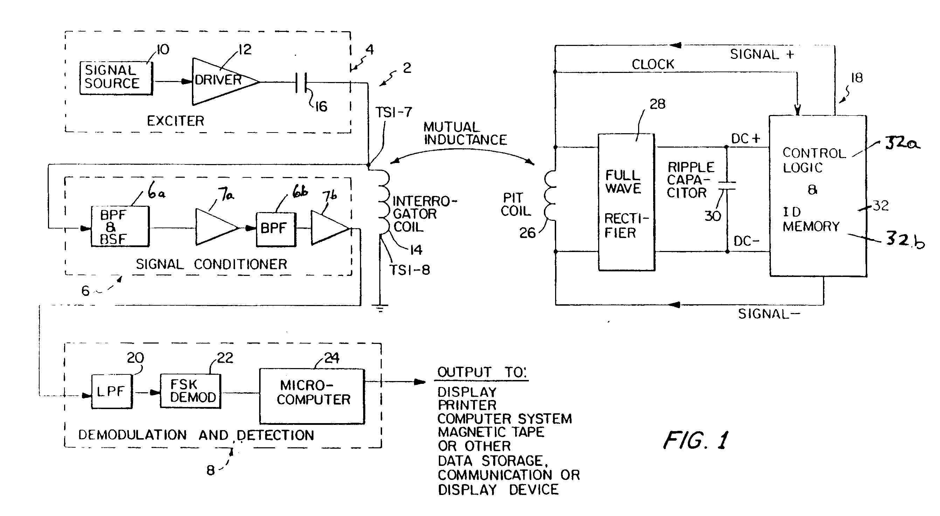

Figure 1 shows an overall block diagram view of the system of the invention, comprising at minimum a reader/exciter 2 and a passive integrated transponder (PIT) 18. In typical use, the reader/exciter 2 will be mounted at an identification location and the PIT 18 will be attached to an object to be identified.

The reader/exciter unit 2 includes three main functional units, an exciter 4, a signal conditioner 6 and demodulation and detection circuits 8. The exciter 4 consists of an AC signal source 10, followed by a power driver 12 which provides a high current, high voltage excitation signal to the interrogator coil 14 through a capacitor 16. The interrogator coil 14 and the capacitor 16 are selected to resonate at the excitation signal frequency, so that the voltage across the coil 14 is much greater than the voltage output from the driver 12.

The signal conditioner 6 connects to the interrogator coil 14 and serves to amplify the signal detected by the coil 14 after transmission from the PIT 18, and filters out the excitation signal, as well as other noise and undesired signals outside of the frequency range of the PIT signals. As shown, signal conditioner 6 includes band pass and band select filters 6a and 6b and amplifiers 7a and 7b.

The amplified output of the signal conditioner 6 is supplied to the demodulation and detection unit 8 which includes a low pass filter 20 to further attenuate the excitation signal, a frequency shift keyed (FSK) signal demodulator 22 and a microcomputer 24. The FSK demodulator 22 is a phase-locked loop circuit configured as a tone decoder, which provides a digital output varying in logic level responsive to shifts in the FSK signal from the PIT 18. The microcomputer 24 extracts the PIT identification code from this digital output, responsive to the timing of transitions between the two logic levels. The identification code derived by the microcomputer 24 can then be transferred to a display or printer, sent over communication lines to a remote point, stored on tape, disk or other storage medium, or sent to another computer, as indicated.

The PIT 18 consists of an induction coil 26 which is located such that the signal transmitted by the interrogator coil 14 couples energy at the excitation frequency into the PIT. This energy is converted to a DC voltage using a full-wave bridge rectifier 28 and a smoothing capacitor 30 as commonly used in power supply circuits. This DC voltage provides power to the control logic 32a and ID memory circuit 32b.

Speaking broadly, and referring to Figure 1, the control logic 32a consists of counters and gates which sequentially read out the contents of the ID memory 32b for generating the identification ID data signal. The logic 32a also inserts a synchronization (sync) word stored in ID memory 32b into the signal data stream from ID memory 32b which allows the reader/exciter to synchronize its clock to the data for decoding the ID of the PIT 18.

When the excitation appears on the PIT coil 26, it is supplied to the control logic to provide a clock signal for the counters of the control logic 32a. The logic circuits 32a convert the serial data and sync word from ID memory 32b into a frequency shift keyed (FSK) waveform, which is connected to the PIT coil 26. The FSK signal appears at the interrogator coil 14 (due to the mutual inductance) as a time varying voltage. It is this voltage which is amplified by the signal conditioner 6 and detected by demodulator and detector 8.

In the following detailed description of the system of the invention, the different various components, eg, the exciter 4, the signal conditioner 6, etc, are described as separate units. Apart from the passive integrated transponder PIT 18, these are connected by way of a standard connection. Again except for the PIT 18, these components may all be provided as a single unit.

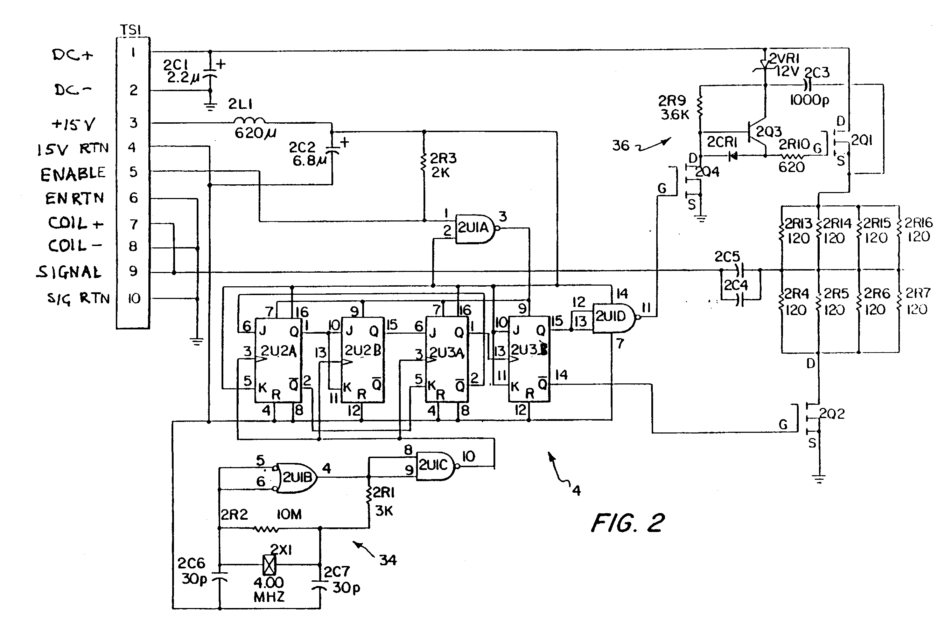

In the following description of the circuits, the number prefixing various reference numerals denotes the figure in which the designated element is shown. Thus, "2C1" or "2L1" indicates that "C1" and "L1" are elements of the circuit shown in Figure 2.

A schematic diagram of the exciter 4 is shown in Figure 2. The exciter consists of a crystal controlled oscillator 34 formed by gate 2U1B and a crystal 2X1. In this example the crystal frequency is 4 MHz. The crystal oscillator output is buffered by 2U1C and then divided in frequency by 5 in flip-flops 2U2A, 2U2B, 2U3A. The output of 2U3A, which is now at 800 kHz, is divided in frequency by another factor of 2 in 2U3B to create a square wave output at 400 kHz. This square wave output then drives a high power switch driver 36, detailed below, which in turn drives the excitation coil 14 (Figure 1). Gate 2U1A in this circuit is to allow the exciter to be remotely enabled and disabled via the enable input line TSI-5 from terminal strip TSI.

The high power switch driver 36 comprises MOS-FETs 2Q1 and 2Q2. MOS-FET 2Q2 is switched on by a positive going signal from pin 14 of 2U3B, providing a low resistance from point D to ground. When the output pin 14 is at a low logic level, MOS-FET 2Q2 is turned fully off. MOS-FET 2Q1 similarly is turned on to pass DC+ from terminal TSI-1. Transistors 2Q3 and 2Q4 perform the voltage translation required to convert the logic-level output of AND-gate 2U1D to the voltage required to drive the gate of 2Q1. As will be appreciated by those skilled in the art, transistors 2Q2 and 2Q1 are connected in a push-pull arrangement, such that 2Q2 is on when 2Q1 is off, and vice versa. This timing of 2Q1 and 2Q2 sets up an AC voltage which is impressed upon the coil 14 (Figure 1), which is connected to terminals TSI-7 and TSI-8 through coupling capacitors 2C4 and 2C5. Resistors 2R4 to 2R7 and 2R13 to 2R16 serve to reduce the dissipation of transistors 2Q1 and 2Q2 during the switching transitions and also define the characteristics of the circuit formed by coupling capacitors 2C4 and 2C5 and coil 14. The voltage across the coil 14 is much greater than the DC voltage at the drain of 2Q1, due to the resonance of 2C4 and 2C5 with the inductance of coil 14 at the excitation frequency. Enable connections TSI-5 and TSI-6 need not be used, but can provide remote control of the exciter. Connections TSI-9 and TSI-10 connect the exciter 4 to the signal conditioner 6, discussed below, to provide it with the detected FSK signal from the PIT.

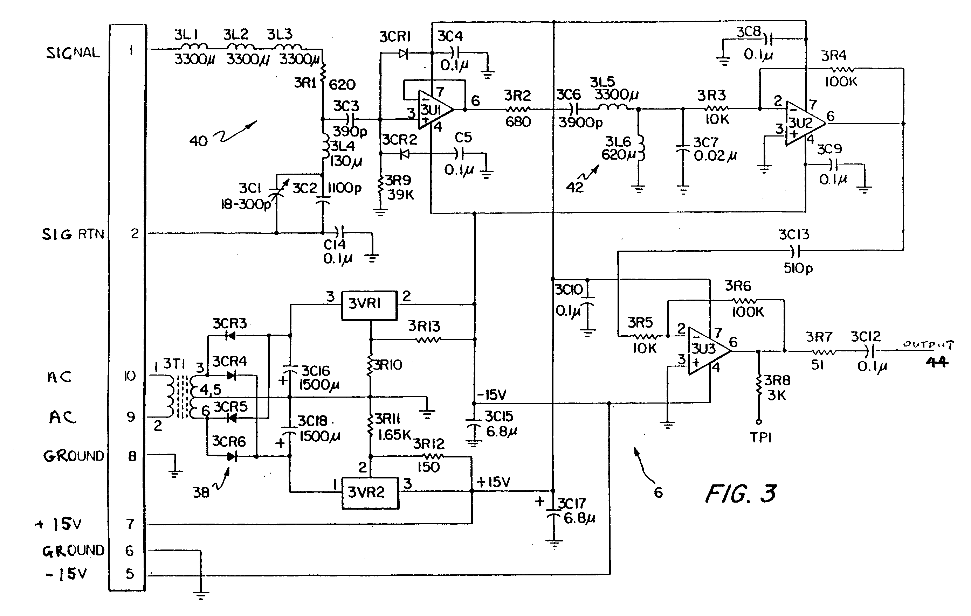

The signal conditioner 6 is shown in Figure 3. It comprises a conventional power supply 38 formed by transformer 3T1, diodes 3CR3 to 3CR6, capacitors 3C15 to 3C18 and voltage regulators 3VR1 and 3VR2. This power supply provides positive and negative 15 volt DC power to the signal conditioning and exciter circuitry. The signal conditoning circuitry consists of a bandpass filter 40 tuned to pass the two frequencies used by the PIT 18. The bandpass filter 40 consists of inductances 3L1, 3L2, 3L3 and capacitors 3C1 and 3C2. In the preferred embodiment the PIT frequency varies between 40 and 50 kilohertz. Resistor 3R1 sets the bandwidth of the filter at 10 kilohertz. Impedances 3L1 to 3L3 provide a high impedance to the excitation frequency of 400 kilohertz, while the series combination of 3L4 and 3C1 and 3C2 serves as a very low impedance to the 400 kilohertz excitation frequency, passing it to ground. The two FSK frequencies received from the PIT 18 are supplied at the SIGNAL and SIG RTN terminals shown. They are supplied to amplifier 3U1, a unity gain amplifier which acts as a buffer to drive a bandpass filter 42 formed by 3C6, 3L5, 3L6 and 3C7, passing signals from 40 to 50 kilohertz. The output of this filter is amplified in 3U2 and 3U3 to create the filtered and amplified output signal 44. Connections for the signal conditioner are generally as indicated : "SIGNAL" and "SIGRTN" connect to the similarly labelled connections TSI-9 and TSI-10, of the exciter circuit of Figure 2. "AC-10" and "AC-9" are connections to a power line, "+ 15 v" is a positive voltage output providing power to exciter 4 (Figure 2), while "GROUND" is a return for the supply voltages and is also connected to exciter 4 (Figure 2).

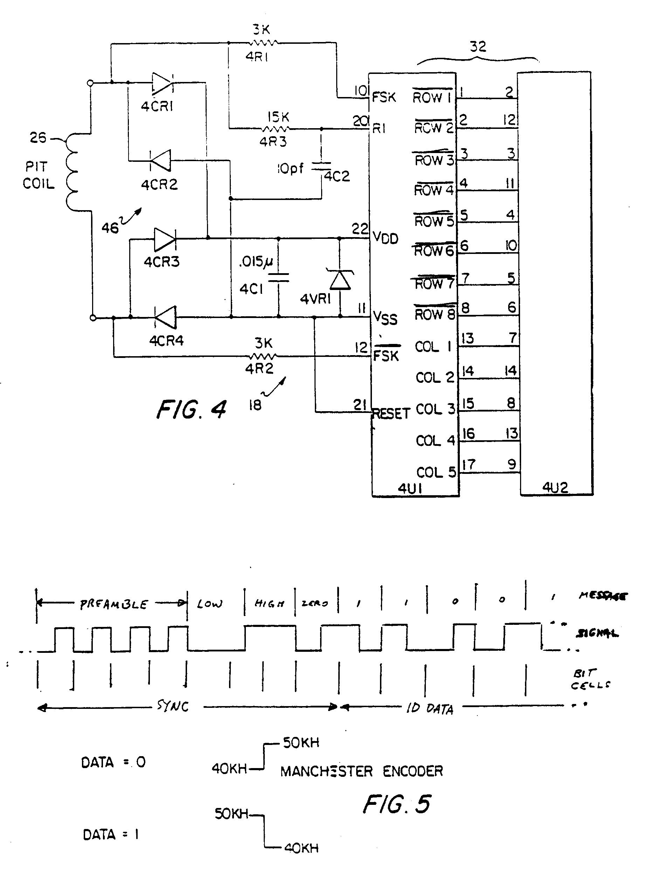

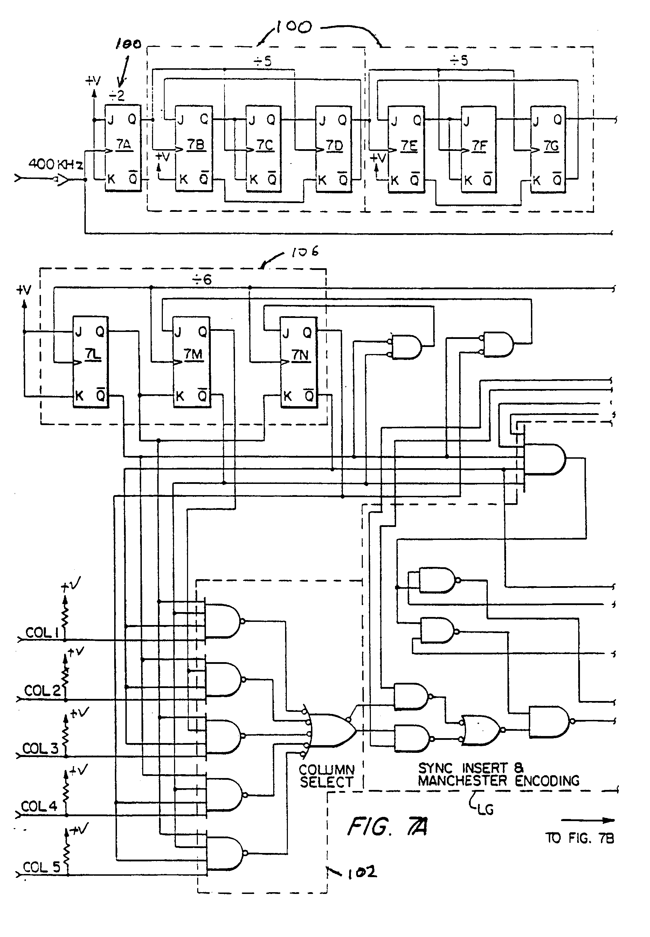

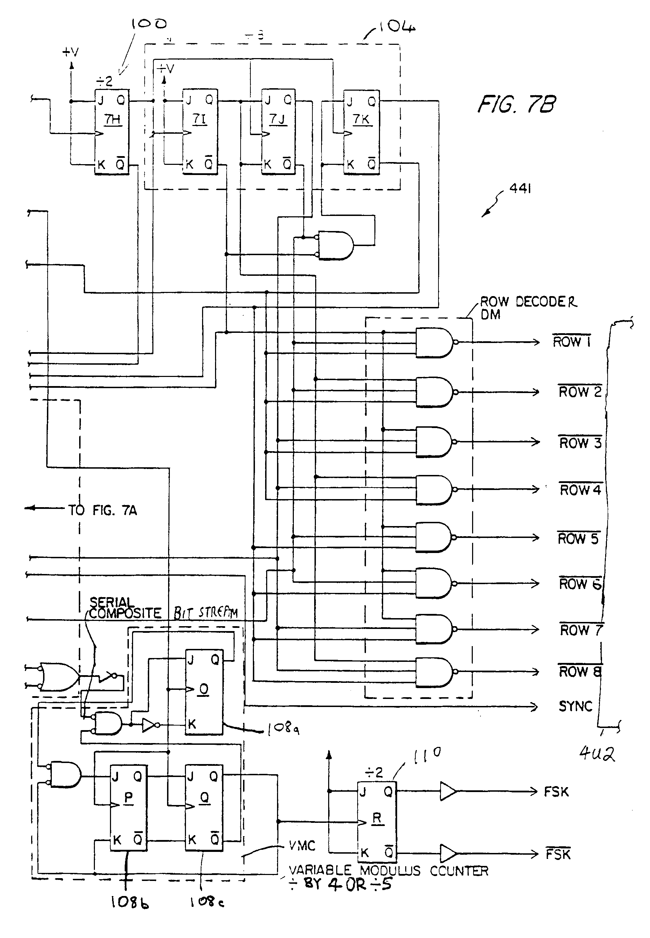

The PIT 18 is shown in Figure 4 and comprises an inductance 26, a full-wave bridge rectifier 46, a programmable diode matrix 4U2 storing the identification data unique to each PIT 18, and the control logic 4U1 necessary to sequentially address the matrix bits and to provide a frequency shift keyed modulated waveform encoding the identification data stored in the matrix 4U2. The circuit is powered by the alternating current induced by the RF excitation signal in the PIT inductance 26. This AC signal is converted to a DC voltage by the full-wave rectifier bridge formed by 4CR1, 4CR2, 4CR3 and 4CR4, which is provided with a filter capacitor 4C1. This filtered DC voltage provides power to the control logic circuits. The Zener diode 4VR1 protects the circuit from excessive DC voltage. Control logic 4U1 (detailed in Figures 7A and 7B) provides the signals for scanning the matrix 4U2, to sequentially address the matrix bits and to convert the ID data received therefrom to serial format, to insert synchronization information, and generate an FSK modulated output. The matrix 4U2 of Figure 4 is a fusible link diode matrix model HM-0186 manufactured by Harris Semiconductor, in which ID data characterizing the particular PIT transponder is stored at manufacture.

The operation of the PIT 18 (Figure 4) is generally as follows. The array 4U2 is scanned at a rate determined by the AC excitation signal, which is low pass filtered by 4R3 and 4C2, (Figure 4) and is then injected into the circuit. Within 4U1, as detailed below in connection with Figures 7A and 7B, the clock signal thus provided is divided in frequency by 100, then further divided by eight, and then decoded to provide eight row select outputs (ROW 1 - ROW 8) to scan the array 4U2. A divide by six counter with associated gating then multiplexes the five column outputs (received by logic 4U1 at terminals COL1-COL5) of the array 4U2 into serial format. Synchronization information is inserted during one phase of the divide by six operation. The resulting serial composite waveform controls a variable modulus counter (providing divide by 4 and divide by 5 operation) which divides the AC excitation signal accordingly, producing an FSK-modulated waveform at 100 and 80 kHz frequency. This waveform is finally divided by 2 and supplied to the inductance 26 via open drain complementary drivers and current limiting resistors 4R1 and 4R2.

Referring to Figures 7A and 7B, the logic 4U1 of Figure 4 is detailed. The incoming 400 kHz clock signal is fed through a series of flip-flop units, indicated generally at 100, being first divided by two, then by five, again by five, again by two and finally by eight (104). The output signal of the series of flip-flops 100, at 500 Hz, is used in connection with row strobing NAND gates DM to successively scan the array 4U2 at connections ROW 1-ROW 8. The five column outputs of array 4U2 are connected to the input pins COL 1 -COL 5 of column select gate array 102. While these input pins COL 1-COL 5 are shown as being connected to a positive voltage by resistors, those of skill in the art will recognize that an equivalent method of pulling up these signals would employ FETs.

The outputs of the three flip-flops of the divide by eight counter 104 are decoded by the eight three-input NAND gates forming the row decoder DM to generate eight row strobe signals ROW 1-ROW 8. These row strobes connect to the row inputs of the diode matrix 4U2. During operation the row strobes ROW 1-ROW 8 are sequentially set to a "low" output. With a 400 kHz clock input, each row strobe is low for 250 micro-seconds, such that all the row inputs sequence through the low state in 2 milliseconds, after which the process is repeated.

The inputs to the five four-input NAND gates of the column select matrix 102 are the column input signals COL 1-COL 5 and the outputs of the three flip-flops making up the divide by six network 106. The column input signals COL 1-COL 5 are sequentially enabled, each for the time consumed by strobing all eight row outputs, 2 milliseconds in the preferred embodiment. Then the next column is enabled, and so on. When the divide-by six network 106 is in the 0-0-0 state, no column inputs are enabled, providing a 2ms "slot" in which the sync word is inserted.

An array LG of logic gates is used to control the insertion of a sync word in the data system, and to encode the stream of data using so-called "Manchester" encoding techniques. The result is a serial composite bit stream including sync and data information which is fed to the variable modulus counter VMC as a composite stream. The composite stream controls the modulus (divide ratio) of the variable modulus counter VMC, which comprises three flip-flops 108a, b and c. The counter flip-flops 108a-c are clocked by the input clock (400 kHz) and their output is either 80 kHz or 100 kHz depending on the data value. This counter drives a divide-by-2 network flip-flop 110, the output of which is thus a 40 kHz or 50 kHz signal, varying as a function of the data.

Flip-flop 110 includes open-drain transistors as its output drivers. These are connected through resistors 4R1, 4R2 (Figure 4) to the transponder coil 26. Thus, when one drive is "on" it "sinks" current from the coil 26. Since the drivers are driven out of phase by signals FSK, $\overline{FSK}$ and are connected to the opposite sides of the coil 26, they drive an alternating current through the coil with a frequency of 40 kHz or 50 kHZ, so that it emits the FSK signal.

A representation of a typical serial digital data stream which controls the variable modulus counter is shown in Figure 5. The data stream typically consists of a total of 48 bit periods. In the preferred embodiments, data is encoded using the Manchester encoding techniques commonly employed in serial data transmission. In the Manchester technique, binary data values are represented by transition from low to high level or high to low level in the middle of the bit period. In the preferred embodiment, the transitions are between lower and higher frequencies, such that the data may be described as frequency shift keyed, and a logical zero in the data is represented by a low to high (ie 40 kHz to 50 kHz) transition in the middle of the bit period. Conversely, a logical one in the data is represented by a transition from high to low frequency (50 kHz to 40 kHz) in the middle of the bit period.

As shown in Figure 5, synchronization ("sync") information is contained in the first 8 bit periods of the data stream. The sync information consists of 4 bit periods of preamble information, which in the preferred embodiment each encode zeroes, followed by a constant low level for one and a half bit periods, a constant high level for one and a half bit periods and a zero data bit. The first four zero data bits of the sync information may be referred to as its preamble, as shown. The eight sync bit periods are followed by 40 periods containing the actual transponder ID data. As an example data reading "11001.." is shown. The circuit runs continuously while power is supplied such that an endless stream of data and sync information appears.

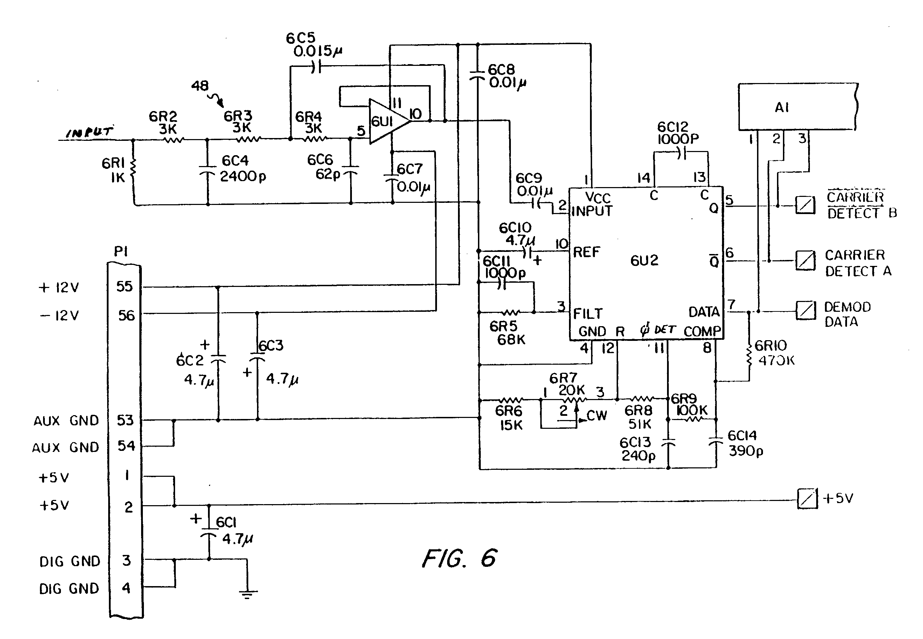

The demodulator circuit 8 is shown in Figure 6. Its input is the output of the signal conditioning circuit of Figure 3. The demodulator circuit of Figure 6 comprises a low pass filter 48 which functions to further attenuate the undesired excitation signal frequencies, followed by a tone decoder 6U2 which tracks the excursions of the frequency shift keyed waveform received from the passive integrated transponder (PIT) 18. 6U2 is an FSK demodulator circuit manufactured by EXAR Corporation under Model No XR-2211. The low pass filter 48 is a three pole unity gain design, formed by amplifier 6U1 in combination with resistors 6R2 to 6R4 and capacitors 6C4 to 6C6. The output of low pass filter 48 drives the tone decoder 6U2. The tone decoder 6U2 itself comprises a voltage controlled oscillator and a phase detector, arranged such that the phase detector output provides a control voltage to the voltage controlled oscillator, to track the frequency excursions of the input signal. The free-running frequency of the voltage controlled oscillator is set by external components 6C12, 6R6 and 6R7. The phase detector output signal, φ DET, provides a control voltage to the oscillator through 6R8, so that the oscillator tracks the frequency of the incoming signal and is phase-locked to it. The output φ DET of the phase detector is filtered by 6C13, 6R9 and 6C14 and input at COMP to a comparator circuit. The comparator threshold is in the centre of the range between the two frequencies. As the frequency shifts between its lower value and its upper value, the DATA output signal of the comparator compared by 6U2 alternates between the two logic levels. Thus, 6U2 demodulates the FSK waveform, presented as INPUT, into a digital waveform DATA output signal. This digital waveform may readily be processed by any suitable microprocessor or microcomputer device using this sync and timing information within the waveform, to actually confirm the detection and to decode the identification sequence, and ultimately to identify the transponder.

The tone decoder 6U2 conventionally also provides output signals, CARRIER DETECT A and B, as shown, indicating detection of a carrier from the PIT 18, as well as the DEMOD DATA output signal shown on Figure 6.

While a preferred embodiment of the invention has been described, it will be appreciated by those of skill in the art that various modifications and improvements thereto are possible. The invention is therefore not to be limited by the above exemplary disclosure, but only by the following claims.

## Claims

1. A transponder (18) for use in an object identification system of the type including an interrogator (2) comprising means (4,6,8,14) for sending an interrogation signal to and for receiving a responsive identification from the transponder (18) by inductive coupling, frequency shift demodulation means, and means for producing an identification of the transponder (18), the transponder (18) being arranged to be fixed to an object to be identified and comprising means (26) for detecting the interrogation signal, means for enabling powering of the transponder (18) by the interrogation signal transmitted by the interrogator (2) and means (32) controlled by the detected interrogation signal for transmitting by frequency shift modulation the identification signal which is composed of binary digits, the interrogation signal can be received concurrently with transmission of the identification signal, characterized in that: the identification signal extends over a plurality of bit cells in time and comprising a composite data stream which comprises a preamble portion of specified length, an identification portion of specified length, and a further encoded portion of specified length and of specified signal content interposed between the preamble portion and the identification portion, wherein the identification portion and the preamble portion of the identification signal include data encoded according to a first format, and the further encoded portion interposed between the preamble portion and the identification portion includes data encoded according to a second format, the preamble portion and the further encoded portion being of shorter length than the identification portion, the bit cells being synchronised to the interrogation signal; the interrogation signal can be received concurrently with transmission of the identification signal, the transponder further comprising a variable modulus counter (108) which is clocked in dependence on the interrogation signal and has a modulus value which is varied according to the composite data stream for providing the identification signal, the data in each of the bit cells varying in accordance with a stored identification code.

2. A transponder as claimed in claim 1, wherein the interrogation signal is an RF signal of specified frequency.

3. A transponder as claimed in any one of the preceding claims, wherein the frequency of the bit cells is an integer factor of the frequency of the interrogation signal.

4. A transponder as claimed in any one of the preceding claims, wherein the frequency shift keyed identification signal is varied between first and second frequencies substantially at the centre of the bit cells, the direction of the variation in a given bit cell encoding a data value to be sent during the bit cell.

5. A transponder as claimed in any one of the preceding claims, including means for deriving the frequency of the bit cells from the RF interrogation signal by successive integer division thereof.

6. A transponder as claimed in claim 5, wherein the integer division means comprises cascading flip-flop circuit elements (100, 104, 106).

7. A transponder as claimed in any one of the preceding claims, including solid-state memory means (4U2) for storing a sequence of digital bits of which the identification signal is composed.

8. A transponder as claimed in claim 7, wherein the solid-state memory means (4U2) is a diode matrix.

9. A transponder as claimed in any one of claims 2 to 8, wherein the identification signal is a frequency-shift-keyed signal varying between first and second frequencies in accordance with the stored identification code, the transponder (18) including means (108a, b, c) for deriving the first and second frequencies from the RF interrogation signal by integer division thereof.

10. An object identification system including at least one transponder (18) as claimed in any one of the preceding claims and an interrogator (2).

## Patentansprüche

1. Transponder (18) zur Verwendung in einem Gegenstandsidentifikationssystem vom Typ, enthaltend eine Abfrageeinrichtung (2), die Einrichtungen (4, 6, 8, 14) zum Senden eines Abfragesignals und zum Empfangen einer beantwortenden Identifikation vom Transponder (18) durch induktive Ankopplung, Frequenzumtast-Demodulationseinrichtungen und Einrichtungen zur Erzeugung einer Identifikation des Transponders (18) umfaßt, wobei der Transponder (18) derart ausgelegt ist, daß er an einem zu identifizierenden Gegenstand befestigt werden kann, und Einrichtungen (26) zur Erkennung des Abfragesignals, Einrichtungen zur Ermöglichung der Energieversorgung des Transponders (18) durch das von der Abfrageeinrichtung (2) ausgesendete Abfragesignal und durch das erkannte Abfragesignal gesteuerte Einrichtungen (32) zur Aussendung des aus Binärzeichen bestehenden Identifikationssignals durch Frequenzumtast-Modulation enthält, wobei das Abfragesignal gleichzeitig mit der Aussendung des Identifikationssignals empfangen werden kann,

dadurch gekennzeichnet,

daß sich das Identifikationssignal zeitlich über eine Vielzahl von Bitzellen erstreckt und einen zusammengesetzten Datenstrom enthält, der einen Anfangsabschnitt definierter Länge, einen Identifikationsabschnitt definierter Länge und einen weiteren kodierten, zwischen dem Anfangsabschnitt und dem Identifikationsabschnitt eingefügten Abschnitt definierter Länge und definierten Signalinhalts aufweist, wobei der Identifikationsabschnitt und der Anfangsabschnitt des Identifikationssignals entsprechend einem ersten Format kodierte Daten enthalten und der weitere kodierte, zwischen dem Anfangsabschnitt und dem Identifikationsabschnitt eingefügte Abschnitt entsprechend einem zweiten Format kodierte Daten enthält, wobei der Anfangsabschnitt und der weitere kodierte Abschnitt von kürzerer Länge als der Identifikationsabschnitt sind, die Bitzellen mit dem Abfragesignal synchronisiert sind und das Abfragesignal gleichzeitig mit der Aussendung des Identifikationssignals empfangen werden kann, und der Transponder außerdem einen betragsvariablen Zähler (108) enthält, der in Abhängigkeit vom Abfragesignal getaktet ist und einen Betragswert hat, der entsprechend dem zusammengesetzten Datenstrom zur Lieferung des Identifikationssignals geändert wird, wobei sich die Daten in jeder der Bitzellen gemäß einem gespeicherten Identifikationskode ändern.

2. Transponder nach Anspruch 1, wobei das Abfragesignal ein Hochfrequenz-Signal definierter Frequenz ist.

3. Transponder nach einem der vorhergehenden Ansprüche, wobei die Frequenz der Bitzellen ein ganzzahliges Vielfaches der Frequenz des Abfragesignals ist.

4. Transponder nach einem der vorhergehenden Ansprüche, wobei das frequenzumgetastete Identifikationssignal zwischen einer ersten und zweiten Frequenz im wesentlichen im Zentrum der Bitzellen verändert wird, wobei die Richtung der Veränderung in einer vorgegebenen Bitzelle einen während der Bitzelle zu sendenden Datenwert kodiert.

5. Transponder nach einem der vorhergehenden Ansprüche, enthaltend Einrichtungen zur Ableitung der Frequenz der Bitzellen aus dem Hochfrequenz-Abfragesignal durch wiederholte ganzzahlige Division davon.

6. Transponder nach Anspruch 5, wobei die Einrichtungen zur ganzzahligen Division kaskadenartig angeordnete Flip-Flop-Schaltungselemente (100, 104, 106) umfassen.

7. Transponder nach einem der vorhergehenden Ansprüche, enthaltend Festkörper-Speichereinrichtungen (4U2) zur Speicherung einer Sequenz digitaler Bits, aus welchen das Identifikationssignal zusammengesetzt ist.

8. Transponder nach Anspruch 7, wobei die Festkörper-Speichereinrichtung (4U2) eine Diodenmatrix ist.

9. Transponder nach einem der Ansprüche 2 bis 8, wobei das Identifikationssignal ein frequenzumgetastetes Signal ist, das zwischen einer ersten und zweiten Frequenz gemäß dem gespeicherten Identifikationskode variiert, wobei der Transponder (18) Einrichtungen (108a, b, c) zur Ableitung der ersten und zweiten Frequenz aus dem Hochfrequenz-Abfragesignal durch ganzzahlige Division davon enthält.

10. Gegenstandserkennungssystem, enthaltend zumindest einen Transponder (18) gemäß einem der vorhergehenden Ansprüche sowie eine Abfrageeinrichtung (2).

**Revendications**

1. Répondeur (18) destiné à être utilisé dans un système d'identification d'objets du type englobant un interrogateur (2) comprenant des moyens (4, 6. 8, 14) destinés à émettre un signal d'interrogation au répondeur (18) et à recevoir une identification sous forme de réponse depuis ce dernier par couplage inductif, un moyen de démodulation par déplacement de fréquence, ainsi qu'un moyen destiné à fournir une identification du répondeur (18), le répondeur (18) étant aménagé pour pouvoir se fixer à un objet à identifier et comprenant un moyen (26) destiné à détecter le signal d'interrogation, un moyen destiné à permettre l'alimentation du répondeur (18) à l'intervention du signal d'interrogation transmis par l'interrogateur (2) et un moyen (32) commandé par le signal d'interrogation détecté, destiné à transmettre à l'intervention d'une modulation par déplacement de fréquence, le signal d'identification qui est composé de bits, le signal d'interrogation pouvant être reçu concurremment à la transmission du signal d'identification, caractérisé en ce que: le signal d'identification s'étend sur plusieurs cellules de bits au cours du temps et comprend un courant composite de données comprenant une portion de synchronisation initiale de longueur spécifique, une portion d'identification de longueur spécifique, ainsi qu'une autre portion encodée de longueur spécifique et ayant une teneur signalétique spécifique, intercalée entre la portion de synchronisation initiale et la portion d'identification, la portion d'identification et la portion de synchronisation initiale du signal d'identification englobant des données codées sel on un premier format, l'autre portion encodée intercalée entre la portion de synchronisation initiale et la portion d'identification englobant des données codées selon un deuxième format, la portion de synchronisation initiale et l'autre portion encodée ayant une longueur inférieure à celle de la portion d'identification, les cellules de bits étant synchronisées par rapport au signal d'interrogation; et le signal d'interrogation peut être reçu concurremment à la transmission du signal d'identification, le répondeur comprenant en outre un compteur de module variable (108) cadencé en fonction du signal d'interrogation et ayant une valeur de module variant en fonction du courant composite de données pour fournir le signal d'identification, les données dans chacune des cellules de bits variant en fonction d'un code d'identification enregistré.

2. Répondeur selon la revendication 1, dans lequel le signal d'interrogation est un signal RF de fréquence spécifique.

3. Répondeur selon l'une quelconque des revendications précédentes, dans lequel la fréquence des cellules de bits est un facteur entier de la fréquence du signal d'interrogation.

4. Répondeur selon l'une quelconque des revendications précédentes, dans lequel le signal d'identification commandé par le déplacement de fréquence varie entre des première et seconde fréquences essentiellement au centre des cellules de bits, la direction de variation dans une cellule de bits donnée encodant une valeur de données destinée à être émise en passant par la cellule de bits.

5. Répondeur sel on l'une quel conque des revendications précédentes, englobant un moyen destiné à dériver la fréquence des cellules de bits à partir du signal RF d'interrogation par des divisions entières successives de ce dernier.

6. Répondeur selon la revendication 5, dans lequel le moyen de division entière comprend des éléments de circuits à bascule (100, 104, 106) disposés en cascade.

7. Répondeur selon l'une quelconque des revendications précédentes, englobant un moyen de mémoire transistorisée (4U2) destiné à mémoriser une séquence de bits numériques dont est composé le signal d'identification.

8. Répondeur selon la revendication 7, dans lequel le moyen de mémoire transistorisée (4U2) est une matrice à diodes.

9. Répondeur selon l'une quelconque des revendications 2 à 8, dans lequel le signal d'identification est un signal commandé par déplacement de fréquence, qui varie entre des première et seconde fréquences conformément au code d'identification mémorisé, le répondeur (18) englobant des moyens (108a, b, c) destinés à dériver les première et seconde fréquences du signal RF d'interrogation par une division entière de ce dernier.

10. Système d'identification d'objets englobant au moins un répondeur (18) tel que revendiqué dans l'une quelconque des revendications précédentes, ainsi qu'un interrogateur (2).

FIG. 1

FIG. 2

EP 0 171 433 B2

FIG. 3

FIG. 4

DATA = 0

DATA = 1

MANCHESTER ENCODER

FIG. 5

FIG. 6

EP 0 171 433 B2

FIG. 7A

TO FIG. 7B

FIG. 7B